# EUROPÄISCHE PATENTSCHRIFT

(11) **EP 2 392 602 B1**
(45) Veröffentlichungstag und Bekanntmachung des Hinweises auf die Patenterteilung: **24.06.2015**
(21) Anmeldenummer: 11168197.9
(22) Anmeldetag: 31.05.2011
(51) Int. Cl.: C08G 18/10, C08G 18/42, C08G 18/76

(54) **THERMOPLASTISCH VERARBEITBARE POLYURETHANE AUF BASIS VON BERNSTEINSÄUREPROPIONATEN**
THERMOPLASTIC PROCESSED POLYURETHANES ON THE BASIS OF SUCCINIC ACID PROPIONATES
POLYURÉTHANE POUVANT ÊTRE TRAITÉ DE MANIÈRE THERMOPLASTIQUE À BASE D'ACIDE DE PROPIONATE SUCCINITÉ

(30) Priorität: 02.06.2010 DE 102010022464
(43) Veröffentlichungstag der Anmeldung: 07.12.2011
(73) Patentinhaber: Bayer Intellectual Property GmbH, 40789 Monheim (DE)
(72) Erfinder: Bräuer, Wolfgang, 51375 Leverkusen (DE); Shen, Yi, Shanghai 201206 (CN); Kaufhold, Wolfgang, 51061 Köln (DE); Nefzger, Hartmut, 50259 Pulheim (DE); Peerlings, Henricus, 42699 Solingen (DE)
(74) Vertreter: BIP Patents

(56) Entgegenhaltungen:
- EP-A2- 1 757 632
- WO-A1-2008/104541

## Beschreibung

Die vorliegende Erfindung betrifft thermoplastisch verarbeitbare Polyurethane auf Basis von Bernsteinsäurepropionaten.

Thermoplastische Polyurethan-Elastomere (TPU) sind seit langem bekannt. Sie sind von technischer Bedeutung aufgrund der Kombination hochwertiger mechanischer Eigenschaften mit den bekannten Vorteilen der kostengünstigen thermoplastischen Verarbeitbarkeit. Durch die Verwendung unterschiedlicher chemischer Aufbaukomponenten läßt sich eine große Variationsbreite mechanischer Eigenschaften erzielen. Eine Übersicht über TPU, ihre Eigenschaften und Anwendungen wird z.B. in Kunststoffe 68 (1978), Seiten 819 bis 825 oder Kautschuk, Gummi, Kunststoffe 35 (1982), Seiten 568 bis 584 gegeben.

TPU werden aus linearen Polyolen, meist Polyester- oder Polyether-Polyolen, organischen Diisocyanaten und kurzkettigen Diolen (Kettenverlängerern) aufgebaut. Zur Beschleunigung der Bildungsreaktion können zusätzlich Katalysatoren zugesetzt werden. Zur Einstellung der Eigenschaften können die Aufbaukomponenten in relativ breiten molaren Verhältnissen variiert werden. Bewährt haben sich molare Verhältnisse von Polyolen zu Kettenverlängerern von 1:1 bis 1:12. Hierdurch ergeben sich Produkte im Bereich von 50 ShoreA bis 75 Shore D.

Die TPU können kontinuierlich oder diskontinuierlich hergestellt werden. Die bekanntesten technischen Herstellverfahren sind das Bandverfahren (GB 1057018 A) und das Extruderverfahren (DE 1964834 A und DE 2059570 A).

Über die Polyole lassen sich eine Vielfalt von Eigenschaftskombinationen gezielt einstellen, wobei gute Mechanikwerte für Elastomere natürlich besonders wichtig sind. Die Verwendung von Polyether-Polyole verleihen TPU besonders gute Hydrolyseeigenschaften. Wenn man gute Mechanikwerte haben will, sind Polyester-Polyole vorteilhaft.

Polyester-Polyole für TPU werden beispielsweise aus Dicarbonsäuren mit 2 bis 12 Kohlenstoffatomen, bevorzugt 4 bis 6 Kohlenstoffatomen, und mehrwertigen Alkoholen wie Glykolen mit 2 bis 10 Kohlenstoffatomen hergestellt, wobei standardmäßig Polyestermolekulargewichte von 500 bis 5000 zum Einsatz kommen. Wie in der EP 175 76 32 A2 auch für TPU aus Polyester-Polyolen beschrieben wird, erhält man mittels einer besonderen Dosierreihenfolge der Monomere TPU, welche besonders homogene Formkörper mit besonders guter Standfestigkeit liefern.

Die WO 2008/104541 A beschreibt die Umsetzung von Bernsteinsäure, welche biologisch durch Fermentation von Kohlenhydraten hergestellt mit mindestens zweifunktionellen Alkoholen zu Polyesteralkoholen. Als zweifunktionelle Alkohole werden Monoethylenglykol, Diethylenglykol, Monopropylenglykol, Dipropylenglykol, 1,4-Butandiol, 1,5-Pentandiol, 1,6-Hexandiol, 2-methyl-1,3-propandiol, 3-Methyl-1,5-pentandiol, Neopentylglykol, Glycerin, Trimethylpropandiol, Pentaerythrit und Sorbitol ausgewählt. Polyesteralkohole basierend auf 1,3-Propandiol werden nicht erwähnt und keine Einschränkungen oder Vorzugsbereiche für das Molekulargewicht der Polyesteralkohole genannt. Es werden auch aus diesen Polyesteralkoholen hergestellte TPU beansprucht. In den Beispielen werden Polyester aus Bernsteinsäure, Adipinsäure und Ethylenglykol und Butandiol mit Molekulargewichten von ca. 1900 beschrieben und zu TPU umgesetzt, welche keine besonderen Eigenschaften und durchschnittliche Mechanik-Werte aufweisen. Eine Verbesserung der Werte wird nicht erreicht; der Weiterreißwiderstand wird sogar etwas verschlechtert.

Aufgabe der vorliegenden Erfindung war es, TPU zur Verfügung zu stellen, die verbesserte Mechanik-Eigenschaften wie z.B 100%-Modul (ISO 527-1,-3) oder Weiterreißwiderstand (ISO 34-1) aufweisen und ganz oder teilweise aus biologisch herstellbaren Komponenten hergestellt sind.

Diese Aufgabe konnte überraschenderweise durch thermoplastisch verarbeitbare Polyurethanelastomere mit einer Härte von 50 Shore A bis 70 ShoreD (ISO868), welche erhältlich sind aus den Komponenten
a) ein oder mehrere lineare Polyesterdiole mit einer Funktionalität von 1,8 bis 2,2,
b) ein oder mehrere organische Diisocyanate,
c) eine oder mehrere Diole mit Molekulargewichten von 60 bis 350 g/mol (im weiteren auch "Kettenverlängerer" genannt),
wobei ein molares NCO : OH-Verhältnis von 0,9 : 1 bis 1,1 : 1 eingestellt wird, und dadurch gekennzeichnet sind, dass die linearen Polyesterdiole a) Bernsteinsäure-1,3-propionat enthalten und ein mittleres Molekulargewicht von 1950 bis 4000 g/mol aufweisen, gelöst werden.

Als "molares NCO : OH" Verhältnis wird hierbei das Verhältnis von Isocyanat - Gruppen b) zu den gegenüber Isocyanatgruppen reaktiven Hydroxy-Gruppen aus a) und c) bezeichnet.

Der Ausdruck "mittleres Molekulargewicht" bezieht sich hier und im weiteren auf das zahlenmittlere Molekulargewicht M̅ₙ.

Als organische Diisocyanate b) kommen beispielsweise aliphatische, cycloaliphatische, araliphatische, heterocyclische und aromatische Diisocyanate in Betracht, wie sie z.B. in Justus Liebigs Annalen der Chemie, 562, Seiten 75 bis 136, beschrieben werden.

Im Einzelnen seien beispielhaft genannt: aliphatische Diisocyanate, wie Hexamethylendiisocyanat, cycloaliphatische Diisocyanate, wie Isophorondiisocyanat, 1,4-Cyclohexan-diisocyanat, 1-Methyl-2,4-cyclohexan-diisocyanat und 1-Methyl -2,6-cyclohexan-diisocyanat sowie die entsprechenden Isomerengemische, 4,4'- Dicyclohexylmethandiisocyanat, 2,4'- Dicyclohexylmethandiisocyanat und 2,2'-Dicyclohexylmethandiisocyanat sowie die entsprechenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate oder 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, 1,4-Cyclohexandiisocyanat, Isophorondiisocyanat, Dicyclohexylmethandiisocyanat, Diphenylmethandiisocyanat-Isomerengemische mit einem 4,4'-Diphenylmethandiisocyanatgehalt von mehr als 96 Gew.-%, 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Mol-% (berechnet auf Gesamt-Diisocyanat) eines Polyisocyanates verwendet werden, es darf aber höchstens soviel Polyisocyanat zugesetzt werden, dass ein noch thermoplastisch verarbeitbares Produkt entsteht. Beispiele für Polyisocyanate sind Triphenylmethan-4,4',4"-triisocyanat und Polyphenyl-polymethylen-polyisocyanate.

Als Polyole werden lineare Polyesterdiole eingesetzt. Produktionsbedingt enthalten diese oft kleine Mengen an nichtlinearen Verbindungen. Häufig spricht man daher auch von "im Wesentlichen linearen Polyolen".

Erfindungsgemäß einzusetzende Polyesterdiole oder auch Gemische mehrerer Polyesterdiole a) sind zu 40 - 100 Gew.-%, bevorzugt zu 90 - 100% Gew.-% aus Bernsteinsäure und 1,3-Propandiol aufgebaut, wobei sich die Gew.-% Angaben auf das Gesamtgewicht der eingesetzten Polyesterdiole beziehen.

Die Polyesterdiole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterdiole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, beispielsweise Dimethylterephthalat oder Dimethyladipat, Carbonsäureanhydride, beispielsweise Bernsteinsäureanhydrid, Glutarsäureanhydrid oder Phthalsäureanhydrid, oder Carbonsäurechloride zu verwenden. Beispiele für mehrwertige Alkohole sind Glykole mit 2 bis 10, vorzugsweise 2 bis 6 Kohlenstoffatomen, z.B. Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol, 2-Methylpropandiol-1,3, 3-Methylpentandiol-1,5 oder Dipropylenglykol.

Daneben können auch geringe Mengen von bis zu 3 Gew.-% an der Gesamtreaktionsmischung höherfunktionelle, niedermolekulare Polyole wie z.B. 1,1,1-Trimethylolpropan oder Pentaerythrit mitverwendet werden.

Bevorzugt ist die Verwendung ausschließlich bifunktioneller Ausgangsverbindungen.

Ebenso kann es beispielsweise beim Einsatz von Dimethylestern der Dicarbonsäuren infolge nicht ganz vollständiger Umesterung dazu kommen, dass geringe Mengen an nicht umgesetzten Methylesterendgruppen die Funktionalität der Polyester auf unter 2,0, beispielsweise auf 1,95 oder auch auf 1,90 verringern.

Die Polykondensation erfolgt auf den dem Fachmann bekannten Wegen, beispielsweise dadurch, dass man bei Temperaturen von 150 bis 270°C zunächst unter Normaldruck oder leicht vermindertem Druck das Reaktionswasser austreibt und im späteren Verlauf den Druck langsam absenkt, z.B. auf 5 bis 20 mbar. Ein Katalysator ist grundsätzlich nicht erforderlich, aber normalerweise sehr hilfreich. Beispielsweise kommen Zinn-II-Salze, Titan-IV-Verbindungen, Wismut-III-Salze und andere hierzu in Betracht.

Weiterhin kann es vorteilhaft sein, ein inertes Schleppgas, wie z.B. Stickstoff, zum Austreiben des Reaktionswassers zu verwenden. Daneben sind auch Methoden anwendbar, bei denen ein bei Raumtemperatur flüssiges Schleppmittel, beispielsweise Toluol, in einer Azeotropveresterung zum Einsatz kommt.

Normalerweise wird zur Synthese der TPU nur ein im Wesentlichen lineares Polyesterdiol eingesetzt. Es können jedoch auch Gemische von mehr als einen im Wesentlichen linearen Polyesterdiolen verwendet werden.

Wie oben enthalten die Polyesterdiole, ggf. die Gemische mehrerer Polyesterdiole zu 40-100 Gew.-%, bevorzugt zu 90-100% Gew.-% bezogen auf alle eingesetzten Polyesterdiole Bernsteinsäure-1,3-propionat. Bernsteinsäure-1,3-propionat wird aus Bernsteinsäure und 1,3-Propandiol aufgebaut.

Bernsteinsäure kann auf petrochemischen Weg, beispielsweise unter Einsatz von Maleinsäure als Ausgangsverbindung, hergestellt werden oder aus biologischen Quellen stammen.

Beim Rückgriff auf biologische Quellen kommen Kohlehydrate in Betracht, die auf mikrobakteriellem Weg durch Fermentation in Bernsteinsäure umgewandelt werden, wie es beispielsweise in US-A 5,869,301 beschrieben ist.

Ebenso kann 1,3-Propandiol auf petrochemischem Weg, beispielsweise unter Einsatz von Acrolein als Ausgangsverbindung, hergestellt werden oder aus biologischen Quellen stammen. So wird beispielsweise 1,3-Propandiol bei der Firma DuPont Tate & Lyle fermentativ aus Maissirup im großtechnischen Maßstab gewonnen.

Bevorzugte Polyesterdiole werden unter Verwendung von mindestens 90 Gew.-% biobasierter Bernsteinsäure (bezogen auf das Gesamtgewicht der eingesetzten Carbonsäure oder Bernsteinsäure) und/oder mindestens 90 Gew.-% biobasiertem 1,3-Propandiol (bezogen auf das Gesamtgewicht des eingesetzten Diols oder Propandiols) hergestellt.

Die Polyesterdiole besitzen erfindungsgemäß zahlenmittlere Molekulargewichte Mₙ von 1950 bis 4000 g/mol, bevorzugt von 2000 - 3500 g/mol, besonders bevorzugt von 2100 - 3000 g/mol und ganz besonders bevorzugt von 2200 - 2900 g/mol.

Als Kettenverlängerungsmittel werden Diole, gegebenenfalls in Abmischung mit kleinen Mengen an Diaminen, mit einem Molekulargewicht von 60 bis 350 g/mol eingesetzt, vorzugsweise aliphatische Diole mit 2 bis 14 Kohlenstoffatomen, wie z.B. Ethandiol, 1,3-Propandiol, 1,6-Hexandiol, Diethylenglykol, Dipropylenglykol, Ethylenglykol und insbesondere 1,4-Butandiol. Geeignet sind jedoch auch Diester der Terephthalsäure mit Glykolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, z.B. 1,4-Di(β-hydroxyethyl)-hydrochinon, ethoxylierte Bisphenole, z.B. 1,4-Di(β-hydroxyethyl)-bisphenol A. Bevorzugt werden als Kettenverlängerer Ethandiol, 1,3-Propandiol , 1,4-Butandiol, 1,6-Hexandiol, 1,4-Di(β-hydroxyethyl)-hydrochinon verwendet. Es können auch Gemische der oben genannten Kettenverlängerer eingesetzt werden. Daneben können auch kleinere Mengen an Triolen zugesetzt werden.

Weiterhin können in geringen Mengen auch übliche monofunktionelle Verbindungen, z. B. als Kettenabbrecher oder Entformungshilfen, zugesetzt werden. Beispielhaft genannt seien Alkohole, wie Oktanol und Stearylalkohol oder Amine wie Butylamin und Stearylamin.

Zur Herstellung der TPU können die Aufbaukomponenten, gegebenenfalls in Gegenwart von Katalysatoren, Hilfsmitteln und/oder Zusatzstoffen in solchen Mengen zur Reaktion gebracht werden, dass das Äquivalenzverhältnis von NCO-Gruppen zur Summe der NCOreaktiven Gruppen 0,9 : 1,0 bis 1,1 : 1,0, vorzugsweise 0,95 : 1,0 bis 1,10 : 1,0 beträgt.

Geeignete erfindungsgemäße Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den TPU beträgt in der Regel etwa 0 bis 5 Gew.-%, bevorzugt 0 bis 1 Gew.-% , bezogen auf TPU.

Neben den TPU-Komponenten und den Katalysatoren können auch Hilfsmittel und/oder Zusatzstoffe zugesetzt werden. Genannt seien beispielsweise Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Bevorzugt können den TPU auch nanopartikuläre Feststoffe, wie z.B. Ruß in Mengen von 0 - 10 Gew.-% zugegeben werden. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R.Gächter u. H.Müller (Hanser Verlag München 1990) oder der DE-A 29 01 774 zu entnehmen.

Weitere Zusätze, die in das TPU eingearbeitet werden können, sind Thermoplaste, beispielsweise Polycarbonate und Acrylnitril/Butadien/Styrol-Terpolymere, insbesondere ABS. Auch können andere Elastomere wie Kautschuk, Ethylen/Vinylacetatcopolymere, Styrol/Butadiencopolymere sowie andere TPU verwendet werden. Weiterhin zur Einarbeitung geeignet sind handelsübliche Weichmacher wie Phosphate, Phthalate, Adipate, Sebacate und Alkylsulfonsäureester.

Das TPU wird einstufig (gleichzeitige Zugabe der Reaktionskomponenten = one shot) oder mehrstufig (z.B. Prepolymerverfahren oder dem Weichsegmentvorverlängerungsverfahren gemäß EP-A 571 830) hergestellt.

Bevorzugt wird das TPU mittels eines mehrstufigen Verfahrens umfassend Weichsegmentvorverlängerung hergestellt, wobei
A) ein oder mehrere lineare Polyesterdiole mit einer Funktionalität von 1,8 bis 2,2 mit einer Teilmenge 1 des organischen Diisocyanats oder der mehreren organischen Diisocyanate in einem molaren NCO/OH-Verhältnis von 1,1:1 1 bis 3,5:1, bevorzugt 1,3:1 bis 2,5:1 zu einem höhermolekularen isocyanat-terminierten Prepolymer ("NCO-Prepolymer") umgesetzt werden,
B) das in Stufe A) erhaltene Prepolymer abgemischt wird mit einer Teilmenge 2 des organischen Diisocyanats oder der mehreren organischen Diisocyanate, wobei die Summe aus Teilmenge 1 und Teilmenge 2 der eingesetzten Gesamtmenge an Diisocyanaten entspricht,
C) das in Stufe B) erhaltene Gemisch mit einem oder mehreren Diol-Kettenverlängerern mit Molekulargewichten von 60 bis 350 umgesetzt wird,
wobei ein molares NCO:OH-Verhältnis aus den in A), B) und C) eingesetzten Komponenten von 0,9:1 bis 1,1:1 eingestellt wird und wobei die linearen Polyesterdiole Bernsteinsäure-1,3-propionat enthalten und ein mittleres Molekulargewicht von 1950 bis 4000 g/mol aufweisen

Vorzugsweise sind die organische Diisocyanate der in Schritt A) eingesetzten Teilmenge 1 die gleichen organische Diisocyanate wie bei der in Schritt B) eingesetzten Teilmenge 2.

Unabhängig vom verwendeten Prozess wird das molare Verhältnis der NCO-Gruppen zu den OH-Gruppen insgesamt über alle Stufen auf 0,9 : 1 bis 1,1 : 1 eingestellt..

Zur Herstellung der TPU eignen sich die bekannten Mischaggregate, vorzugsweise die, die mit hoher Scherenergie arbeiten. Für die kontinuierliche Herstellung seien beispielhaft genannt Cokneter, vorzugsweise Extruder, wie z.B. Zweiwellenextruder und Busskneter, oder Statikmischer.

Die erfindungsgemäßen TPU können zu Spritzgießartikeln, z.B. Funktionsteilen an Sportschuhen, und zu homogenen Extrusionsartikeln, insbesondere Folien verarbeitet werden.

Sie weisen verbesserte Mechanikwerte wie z.B einen erhöhten Modul im Zugversuch und einen verbesserten Weiterreißwiderstand auf.

Die Erfindung soll anhand der nachfolgenden Beispiele näher erläutert werden.

### Beispiele

A. Verwendete Rohstoffe :

| | |
|---|---|
| PE 225 B | Butandiol-adipat mit einem Molekulargewicht von Mₙ =2200 g/mol (Fa. BayerMaterialScience AG) |
| MDI | Diphenylmethan-4,4'-diisocyanat (Fa. BayerMaterialScience AG) |
| | |
| BUT | Butandiol-1,4 (Fa. BASF AG) |
| 1,3-Propandiol, biobasiert (Fa. DuPont Tate&Lyle) | |
| Bernsteinsäure biobasiert, Säurezahl: 946 mg KOH/g entspr. Mₙ = 118.6 g/mol (Fa. Bioamber) | |

B. Herstellung der Polyester:

| | |
|---|---|
| BSP 1100 | Bernsteinsäure-1,3-propionat mit einem Molekulargewicht von M̅ₙ =1100 g/mol |
| BSP 2200 | Bernsteinsäure-1,3-propionat mit einem Molekulargewicht von M̅ₙ =2200 g/mol |
| BSP 2900 | Bernsteinsäure-1,3-propionat mit einem Molekulargewicht von M̅ₙ =2900 g/mol |

a) BSP 1100
In einem 6-Liter 4-Halskolben, ausgestattet mit Heizpilz, mechanischem Rührwerk, Innenthermometer, 40 cm-Füllkörper-Kolonne, Kolonnenkopf, absteigendem Intensivkühler sowie Membranvakuumpumpe wurden unter Stickstoffüberschleierung bei Raumtemperatur 2421 g (20,41 Mol) biobasierte Bernsteinsäure und 1817 g (23,87 Mol) 1,3-Propandiol vorgelegt und langsam unter Rühren auf 200°C erhitzt, wobei ab einer Temperatur von ca. 140°C Reaktionswasser abdestillierte. Nach ca. 6 Std. kam die Reaktion zum Erliegen. Man gab 70 mg Zinn-II-Chlorid-dihydrat zu, verminderte im Verlauf von ca. 2 Std. den Druck auf 200 mbar und führte die Reaktion unter diesen Bedingungen für weitere 16 Stunden fort. Zur Vervollständigung der Reaktion verringerte man für weitere 4 Std. das Vakuum auf 16 mbar, kühlte ab und bestimmte folgende Daten:
Analyse des Polyesters BSP 1100: Hydroxylzahl: 104,1 mg KOH/g; Säurezahl: 0,22 mg KOH/g; Viskosität: 11800 mPas (25°C), 1470 mPas (50°C), 405 mPas (75°C)
OH- und die Säurezahlen wurden bestimmt wie beschrieben in "Methoden der organischen Chemie (Houben-Weyl), Makromolekulare Stoffe, Band 14/2, S.17, Georg Thieme Verlag, Stuttgart 1963.
Die Viskositäten wurden mit einem Viskosimeter Physica MCR 51 der Fa. Anton Paar, ausgerüstet mit einem Messkegel CP-50-1, bei Scherraten zwischen 1 und 1000/s bestimmt.
BSP 2200 [b)] und BSP 2900 [c)] wurden analog wie BSP 1100 dargestellt, wobei zur Einstellung der Molekulargewichte der Polyesterpolyole die Molverhältnisse von Dicarbonsäure zu Diol verändert wurden.
b) BSP 2200

| | |
|---|---|
| Einwaage 1,3-Propandiol: | 3776 g (49.7 Mol) |
| Einwaage Bernsteinsäure: | 5437 g (45,8 Mol) |
| Einwaage Zinn-II-Chlorid-dihydrat: | 270 mg |
| Analyse des Polyesters: Hydroxylzahl: | 51,4 mg KOH/g; Säurezahl: 0,4 mg KOH/g; |
| Viskosität: 1660 mPas (75°C) | |

c) BSP 2900

| | |
|---|---|
| Einwaage 1,3-Propandiol: | 3743 g (49,25 Mol) |
| Einwaage Bernsteinsäure: | 5493 g (46,32 Mol) |
| Einwaage Zinn-II-Chlorid-dihydrat: | 180 mg |
| Analyse des Polyesters: Hydroxylzahl: | 38,9 mg KOH/g; Säurezahl: 0,9 mg KOH/g; |
| Viskosität: 3210 mPas (75°C) | |

C. Herstellung der TPU
In einem Reaktionsgefäß wurde gemäß Tabelle 1 jeweils ein Polyol vorgelegt. Nach dem Aufheizen auf 180°C wurde die Teilmenge 1 des 4,4'-Diphenylmethandiisocyanates (MDI) unter Rühren zugesetzt und die Prepolymerreaktion mit Hilfe von 50 ppm bezogen Polyolmenge Katalysator Zinndioctoat zu einem Umsatz von größer 90 mol%, bezogen auf das Polyol gebracht.
Nach beendeter Reaktion wurde unter Rühren die Teilmenge 2 des MDI's zugeführt. Anschließend gab man die in der Tabelle 1 angegebene Menge Kettenverlängerer Butandiol zu., wobei das NCO/OH-Verhältnis aller Komponenten bei 1,00 lag Nach intensiver Durchmischung wurde das TPU-Reaktionsgemisch auf ein Blech ausgegossen und 30 Minuten bei 120°C getempert.

**Tabelle 1**

| **Beispiel** | **Polyol** | **Polyol-menge [mol]** | **MDI Teilmenge 1 [mol]** | **MDI Teilmenge 2 [mol]** | **BUT [mol]** |
|---|---|---|---|---|---|
| **1** | BSP2200 | 1 | 2,78 | 0,94 | 3,72 |
| **2*** | PE 225 B | 1 | 2,78 | 0,94 | 3,72 |
| **3** | BSP2200 | 1 | 2,85 | 1,50 | 4,35 |
| **4*** | BSP1100 | 1 | 2,78 | 0,06 | 1,88 |
| **5*** | PE 225 B | 1 | 2,85 | 1,50 | 4,35 |
| **6** | BSP2200 | 1 | 3,23 | 3,07 | 6,30 |
| **7*** | PE 225 B | 1 | 3,23 | 3,07 | 6,30 |
| **8** | BSP2200 | 1 | 3,51 | 3,87 | 7,38 |
| **9*** | PE 225 B | 1 | 3,51 | 3,87 | 7,38 |
| **10** | BSP2900 | 1 | 2,00 | 3,41 | 5,41 |

| | | | | | |
|---|---|---|---|---|---|
| ***nicht erfindungsgemäßes Vergleichsbeispiel** | | | | | |

Die Gießplatten wurden geschnitten und granuliert. Das Granulat wurde in einer Spritzgießmaschine Allrounder 470 S (30-Schnecke) der Firma Arburg aufgeschmolzen und zu S1-Stäben (Formtemperatur: 25°C; Stabgröße:115x25/6x2), Platten (Formtemperatur: 25°C; Größe: 125x50x2 mm) bzw Rund-Stopfen (Formtemperatur: 25°C; Durchmesser 30mm, Dicke 6 mm) geformt.

### Messungen

Die Messung der Härte erfolgte nach ISO 868; die Messungen im Zugversuch nach ISO 527-1,-3 ergaben 100%-Modul, Reißfestigkeit u. Dehnung ; der Weiterreißwiderstand wurde gemäß ISO 34-1 gemessen.

Die Verfestigungsgeschwindigkeit direkt nach dem Spritzgießen wurde durch eine Härtemessung am Rund-Stopfen direkt nach dem Entformen (ca 3 sec ) als Anfangshärte gemessen.

Je höher dieser Wert, desto höher die Verfestigungsgeschwindigkeit und ums kürzer die Zykluszeit beim Verspritzen.

In Tabelle 2 sind die Messwerte angeführt:

| **Beispiel** | **Härte Shore A** | **Härte Shore D** | **100% Modul MPa** | **Reißfestigkeit MPa** | **Reißdehnung %** | **Weiterreißwiderstand N/mm** | **Anfangshärte nach Spritzg. ShoreA** |
|---|---|---|---|---|---|---|---|
| **1** | 91 | 43 | 10,1 | 48 | 499 | 94 | 56 |
| **2*** | 91 | 42 | 8,0 | 54 | 477 | 88 | 69 |
| **3** | 93 | 47 | 13,2 | 57 | 483 | 124 | 72 |
| **4*** | 91 | 48 | 13,2 | 40 | 476 | 116 | 13 |
| **5*** | 93 | 45 | 9,3 | 58 | 471 | 94 | 78 |
| **6** | 97 | 58 | 24,0 | 45 | 331 | 153 | 88 |
| **7*** | 97 | 55 | 17,8 | 47 | 302 | 125 | 90 |
| **8** | 98 | 64 | 28,1 | 42 | 275 | 175 | |
| **9*** | 98 | 61 | 22,1 | 46 | 274 | 152 | |
| **10** | 94 | 50 | 10,0 | 50 | 637 | 96 | 87 |

| | | | | | | | |
|---|---|---|---|---|---|---|---|
| ***nicht erfindungsgemäßes Vergleichsbeispiel** | | | | | | | |

Im Vergleich zu den üblichen PE 225 B basierten TPU haben die erfindungsgemäßen Bernsteinsäure-1,3-propionat (Molgewicht 2200) basierten TPU bei gleicher Rezeptur deutlich verbesserte 100%-Moduli und Weiterreißfestigkeiten (Beispiele 1-2;3-5;6-7;8-9).

Bei gleichem 100%-Modul hat das TPU auf Basis Polyester Molgewicht 2900 eine weiter verbesserte Verfestigungsgeschwindigkeit (Beispiele 1 u. 10), während das Vergleichs-TPU auf Basis des nicht erfindungsgemäßen Polyesters mit dem Molgewicht 1100 eine deutlich schlechtere Verfestigungsgeschwindigkeit besitzt (Beispiele 3 u. 4*).

## Patentansprüche

1. Thermoplastisch verarbeitbare Polyurethanelastomere mit einer Härte von 50 Shore A bis 70 ShoreD (ISO868), welche erhältlich sind aus den Komponenten
a) ein oder mehrere lineare Polyesterdiole mit einer Funktionalität von 1,8 bis 2,2,
b) ein oder mehrere organische Diisocyanate,
c) eine oder mehrere Diole mit Molekulargewichten von 60 bis 350 g/mol,
wobei ein molares NCO : OH-Verhältnis von 0,9 : 1 bis 1,1 : 1 eingestellt wird,
und **dadurch gekennzeichnet sind, dass** die linearen Polyesterdiole a) Bernsteinsäure-1,3-propionat enthalten und ein zahlen mittleres Molekulargewicht von 1950 bis 4000 g/mol aufweisen.

2. Thermoplastisch verarbeitbare Polyurethanelastomere nach Anspruch 1, **dadurch gekennzeichnet, dass** die linearen Polyesterdiole ein mittleres Molekulargewicht von 2000 - 3500 g/mol aufweisen.

3. Thermoplastisch verarbeitbare Polyurethanelastomere nach einem der vorangehenden Ansprüche, **dadurch gekennzeichnet, dass** mindestens eine der Komponenten a) und c) ganz oder teilweise biologisch erzeugt sind.

4. Thermoplastisch verarbeitbare Polyurethanelastomere nach einem der vorangehenden Ansprüche, **dadurch gekennzeichnet, dass** das organische Diisocyanat b) aus einem oder mehreren Isocyanaten der Gruppe enthaltend 4,4'-Diphenylmethandiisocyanat, Isophorondiisocyanat, Dicyclohexylmethan-4,4-diisocyanat, 1,6-Hexamethylendiisocyanat oder 1,5-Naphthylendiisocyanat ausgewählt wird.

5. Thermoplastisch verarbeitbare Polyurethanelastomere nach einem der vorangehenden Ansprüche, **dadurch gekennzeichnet, dass** der Diol-Kettenverlängerer c) aus einem oder mehreren Kettenverlängerern der Gruppe enthaltend 1,4-Butandiol, 1,3-Propandiol, 1,2-Ethylenglykol, 1,6 Hexandiol oder 1,4-Di(β-hydroxyethyl)-hydrochinon ausgewählt ist.

6. Thermoplastisch verarbeitbare Polyurethanelastomere nach einem der vorangehenden Ansprüche, **dadurch gekennzeichnet, dass** das Bernsteinsäurepropionat aus biologisch durch Fermentation von Kohlehydraten hergestellter Bernsteinsäure aufgebaut ist.

7. Thermoplastisch verarbeitbare Polyurethanelastomere nach einem der vorangehenden Ansprüche, **dadurch gekennzeichnet, dass** das Bernsteinsäurepropionat aus biologisch durch Fermentation von Kohlehydraten hergestellten 1,3-Propandiol aufgebaut ist.

8. Thermoplastisch verarbeitbare Polyurethanelastomere nach einem der vorangehenden Ansprüche, **dadurch gekennzeichnet, dass** der Diol-Kettenverlängerer ein biologisch erzeugtes 1,3-Propandiol enthält.

9. Verfahren zu Herstellung eines thermoplastisch verarbeitbaren Polyurethan-elastomeren gemäß einem der Ansprüche 1 bis 8, **dadurch gekennzeichnet, dass**
A) ein oder mehrere lineare Polyesterdiole mit einer Funktionalität von 1,8 bis 2,2 mit einer Teilmenge 1 des organischen Diisocyanats oder der mehreren organischen Diisocyanat in einem molaren NCO/OH-Verhältnis von 1,1:1 bis 3,5:1, bevorzugt 1,3:1 bis 2,5:1, zu einem isocyanat-terminierten Prepolymer umgesetzt werden,
B) das in Stufe A) erhaltene Prepolymer abgemischt wird mit einer Teilmenge 2 des organischen Diisocyanats oder der mehreren organischen Diisocyanate, wobei die Summe aus Teilmenge 1 und Teilmenge 2 der eingesetzten Gesamtmenge an Diisocyanaten entspricht,
C) das in Stufe B) erhaltene Gemisch mit einem oder mehreren Diol-Kettenverlängerem mit Molekulargewichten von 60 bis 350 g/mol umgesetzt wird,
wobei ein molares NCO:OH-Verhältnis aus den in A), B) und C) eingesetzten Komponenten von 0,9:1 bis 1,1:1 eingestellt wird und wobei die linearen Polyesterdiole Bernsteinsäure-1,3-propionat enthalten und ein zahlen mittleres Molekulargewicht von 1950 bis 4000 g/mol aufweisen

10. Verfahren gemäß Anspruch 9, wobei die Teilmenge 1 dieselbe Diisocyanatzusammensetzung aufweist wie die Teilmenge 2.

## Claims

1. Thermoplastically processable polyurethane elastomers with a hardness of 50 Shore A to 70 Shore D (ISO 868), which are obtainable from the components:
a) one or more linear polyester diols with a functionality of from 1.8 to 2.2,
b) one or more organic diisocyanates,
c) one or more diols with molecular weights from 60 to 350 g/mol,
wherein a molar NCO : OH ratio of from 0.9 : 1 to 1.1 : 1 is established,
and are **characterized in that** the linear polyester diols a) contain succinic acid 1,3-propionate and have a number-average molecular weight of from 1,950 to 4,000 g/mol.

2. Thermoplastically processable polyurethane elastomers according to Claim 1, **characterized in that** the linear polyester diols have an average molecular weight of 2,000 - 3,500 g/mol.

3. Thermoplastically processable polyurethane elastomers according to one of the preceding claims, **characterized in that** at least one of the components a) and c) are produced completely or partly biologically.

4. Thermoplastically processable polyurethane elastomers according to one of the preceding claims, **characterized in that** the organic diisocyanate b) is chosen from one or more isocyanates of the group containing 4,4'-diphenylmethane-diisocyanate, isophorone-diisocyanate, dicyclohexylmethane-4,4-diisocyanate, 1,6-hexamethylenediisocyanate or 1,5-naphthylene-diisocyanate.

5. Thermoplastically processable polyurethane elastomers according to one of the preceding claims, **characterized in that** the diol chain lengthener c) is chosen from one or more chain lengtheners of the group containing 1,4-butanediol, 1,3-propanediol, 1,2-ethylene glycol, 1,6-hexanediol or 1,4-di(β-hydroxyethyl)-hydroquinone.

6. Thermoplastically processable polyurethane elastomers according to one of the preceding claims, **characterized in that** the succinic acid propionate is built up from succinic acid produced biologically by fermentation of carbohydrates.

7. Thermoplastically processable polyurethane elastomers according to one of the preceding claims, **characterized in that** the succinic acid propionate is built up from 1,3-propanediol produced biologically by fermentation of carbohydrates.

8. Thermoplastically processable polyurethane elastomers according to one of the preceding claims, **characterized in that** the diol chain lengthener contains a biologically produced 1,3-propanediol.

9. Process for preparing a thermoplastically processable polyurethane elastomer according to any of Claims 1 to 8, **characterized in that**
A) one or more linear polyester diols with a functionality of from 1.8 to 2.2 are reacted with a partial amount 1 of the organic diisocyanate or the plurality of organic diisocyanates in a molar NCO/OH ratio of from 1.1:1 to 3.5:1, preferably from 1.3:1 to 2.5:1, to form an isocyanate-terminated prepolymer,
B) the prepolymer obtained in step A) is mixed with a partial amount 2 of the organic diisocyanate or the plurality of organic diisocyanates, where the sum of partial amount 1 and partial amount 2 corresponds to the total amount of diisocyanates used,
C) the mixture obtained in step B) is reacted with one or more diol chain lengtheners with molecular weights of from 60 to 350 g/mol,
where a molar NCO:OH ratio of the components used in A), B) and C) of from 0.9:1 to 1.1:1 is set and the linear polyester diols contain succinic acid 1,3-propionate and have a number-average molecular weight of from 1950 to 4000 g/mol.

10. Process according to Claim 9, wherein the partial amount 1 has the same diisocyanate composition as the partial amount 2.

## Revendications

1. Élastomères de polyuréthane pouvant être transformés de manière thermoplastique, présentant une dureté de 50 Shore A à 70 Shore D (ISO868), qui peuvent être obtenus à partir des composants
a) un ou plusieurs polyesterdiols linéaires présentant une fonctionnalité de 1,8 à 2,2,
b) un ou plusieurs diisocyanates organiques,
c) un ou plusieurs diols présentant des poids moléculaires de 60 à 350 g/mole,
un rapport molaire NCO:OH de 0,9:1 à 1,1:1 étant réglé, et qui sont **caractérisés en ce que** les polyesterdiols linéaires a) contiennent de l'acide succinique-1,3-propionate et présentent un poids moléculaire numérique moyen de 1950 à 4000 g/mole.

2. Elastomères de polyuréthane pouvant être transformés de manière thermoplastique selon la revendication 1, **caractérisés en ce que** les polyesterdiols linéaires présentent un poids moléculaire moyen de 2000 à 3500 g/mole.

3. Elastomères de polyuréthane pouvant être transformés de manière thermoplastique selon l'une quelconque des revendications précédentes, **caractérisés en ce qu'**au moins un des composants a) et c) est obtenu de manière totalement ou partiellement biologique.

4. Elastomères de polyuréthane pouvant être transformés de manière thermoplastique selon l'une quelconque des revendications précédentes, **caractérisés en ce que** le diisocyanate organique b) est choisi parmi un ou plusieurs isocyanates du groupe contenant le diisocyanate de 4,4'-diphénylméthane, le diisocyanate d'isophorone, le dicyclohexylméthane-4,4-diisocyanate, le diisocyanate de 1,6-hexaméthylène ou le diisocyanate de 1,5-naphtylène.

5. Elastomères de polyuréthane pouvant être transformés de manière thermoplastique selon l'une quelconque des revendications précédentes, **caractérisés en ce que** l'agent d'allongement de chaîne diol c) est choisi parmi un ou plusieurs agents d'allongement de chaîne du groupe contenant le 1,4-butanediol, le 1,3-propanediol, le 1,2-éthylèneglycol, le 1,6-hexanediol ou la 1,4-di(β-hydroxyéthyl)-hydroquinone.

6. Elastomères de polyuréthane pouvant être transformés de manière thermoplastique selon l'une quelconque des revendications précédentes, **caractérisés en ce que** l'acide succinique-propionate est formé à partir d'acide succinique préparé de manière biologique par fermentation d'hydrates de carbone.

7. Elastomères de polyuréthane pouvant être transformés de manière thermoplastique selon l'une quelconque des revendications précédentes, **caractérisés en ce que** l'acide succinique-propionate est formé à partir 1,3-propanediol préparé de manière biologique par fermentation d'hydrates de carbone.

8. Elastomères de polyuréthane pouvant être transformés de manière thermoplastique selon l'une quelconque des revendications précédentes, **caractérisés en ce que** l'agent d'allongement de chaîne diol contient du 1,3-propanediol produit de manière biologique.

9. Procédé pour la préparation d'un élastomère de polyuréthane pouvant être transformé de manière thermoplastique selon l'une quelconque des revendications 1 à 8, **caractérisé en ce que**
A) un ou plusieurs polyesterdiols linéaires présentant une fonctionnalité de 1,8 à 2,2 sont transformés avec une quantité partielle 1 du diisocyanate organique ou des plusieurs diisocyanates organiques dans un rapport molaire NCO/OH de 1,1:1 à 3,5:1, de préférence de 1,3:1 à 2,5:1, en un prépolymère terminé par isocyanate,
B) le prépolymère obtenu dans l'étape A) est mélangé avec une quantité partielle 2 du diisocyanate organique ou des plusieurs diisocyanates organiques, la somme de la quantité partielle 1 et de la quantité partielle 2 correspondant à la quantité totale utilisée de diisocyanates,
C) le mélange obtenu dans l'étape B) est transformé avec un ou plusieurs agents d'allongement de chaîne diol présentant des poids moléculaires de 60 à 350 g/mole,
un rapport molaire NCO:OH des composants utilisés dans A), B) et C) de 0,9:1 à 1,1:1 étant réglé et les polyesterdiols linéaires contenant de l'acide succinique-1,3-propionate et présentant un poids moléculaire numérique moyen de 1950 à 4000 g/mole.

10. Procédé selon la revendication 9, la quantité partielle 1 présentant la même composition en diisocyanates que la quantité partielle 2.
